# EUROPEAN PATENT SPECIFICATION

(11) **EP 4 423 514 B1**
(45) Date of publication and mention of the grant of the patent: **10.09.2025**
(21) Application number: 22809450.4
(22) Date of filing: 27.10.2022
(51) Int. Cl.: G01P 3/36, G01P 3/56, G01P 21/02, G01P 3/481, G01P 5/00

(54) **METHOD OF CHECKING ROLLERS AND THE MOTION TRANSMISSION ELEMENTS**
VERFAHREN ZUR PRÜFUNG VON WALZEN UND ANTRIEBSELEMENTEN EINES FÖRDERSYSTEMS
PROCÉDÉ D'EXAMEN DES ROULEAUX ET DES ÉLÉMENTS DE TRANSMISSION DU MOUVEMENT D'UN SYSTÈME DE CONVOYAGE

(30) Priority: 28.10.2021 EP 21205416
(43) Date of publication of application: 04.09.2024
(73) Proprietor: Saint-Gobain Glass France, 92400 Courbevoie (FR)
(72) Inventor: RODRIGUEZ RODRIGUEZ, Armando Nemesio, 3345 PIEDRAS BLANCAS (Castrillon) (ES); ALVAREZ-CASARIEGO ALVAREZ, Maria José, 33405 SALINAS (Castrillon) (ES); BLANCO GOMEZ, David, 33207 GIJON (ES)
(74) Representative: Saint-Gobain Recherche
(86) International application number: PCT/EP2022/080102
(87) International publication number: WO 2023/073113

(56) References cited:
- EP-B1- 0 536 746
- US-A1- 2016 003 862
- US-A1- 2018 297 619
- US-B1- 6 250 904

## Description

### Prior art

US 6 250 904 B1 discloses a system for reducing speed fluctuations in a conveying system, wherein the angular speed of each of the rolls is determined and all are individually controlled in order to reduce scratches on the finished product.

The defect "Claw-marks" (or "Griffes" in French) together with other roller marks defects on the tin side of the glass are a source of yield losses in the float glass production lines with important indirect costs. Even if the losses produced by this type of defects is not too important compared with other sources of losses, claw-marks always happen in "crisis mode" producing an important effect on the production planning of the plant.

This defect appears as groups of scratches more or less deep or long in the tin side of the glass. The defect appears in all glass thicknesses and colours but they are more noticeable in the case of dark glass.

Claw marks are produced by the sliding of the glass above the roller because of the difference between glass and roller speeds.

As all the rollers in a certain section of the annealing lehr are mechanically coupled to the motor with the same type of gears, they will all run with the same mean speed. However, and for different reasons, each roller may show certain speed variability around this mean value. Claw-marks apparition will be, then, related to this speed variability.

Thus, there is a need for a method for checking, measuring and quantifying roller speed instability.

### Summary of the invention

The present invention provides a method to overcome the above mentioned drawbacks.

To this end, the present invention relates to a method for checking the rollers of conveying means, said conveying means being driven to a defined line speed, said method comprising the steps of:
- Carrying a surface speed measurement device;
- For each of a plurality of rollers,
   Pointing the measuring device to a location of a roller to obtain a serial of values representative of the speed for this roller;
   Calculating the mean value of the serial of values representative of the speed for this roller
   Comparing the mean value representative of the speed for the roller to the line speed so as to obtain a factor K;
   Multiplying each value of the serial of values representative of the speed by its factor K to obtain corrected values of speed
- using said corrected values representative of the speed to determine the speed variation to check the rollers

According to an example, the value representative of the speed variation is chosen in the list comprising mean absolute deviation, the standard deviation, the variation range, the kurtosis.

According to an example, the value representative of the speed variation is compared to a defined threshold.

According to an example, the value representative of the speed variation of each roller are added together and averaged to obtain a calculated threshold, each value representative of the speed is compared to said calculated threshold.

According to an example, it comprises, before the step of pointing the beam of the surface speed measurement device, a step consisting in carrying a benchmark instrument and fix it to a roller.

According to an example, the benchmark instrument is a disc able to be fix to a roller, the plan of said disc being perpendicular to the floor.

According to an example, the benchmark instrument further comprises a reference point so that the beam of the surface speed measurement device is pointed at the reference point.

According to an example, the surface speed measurement device is a laser Doppler measuring device.

### DESCRIPTION OF THE FIGURES

Other particular features and advantages will become clearly apparent from the following description made thereof by way of indication and in a completely non-limiting manner, with reference to the appended drawings in which:
- Figure 1 is a schematic representations of a conveying system in an oven;
- Figure 2 is a schematic representations of a sectional view of a conveying system in an oven;
- Figures 3 - 4 are, respectively, diagram and corrected diagram of speed versus time;
- Figure 5 is a diagram of the amplitude of speed variation for each roller;
- Figure 6 is a schematic representations of a sectional view of a conveying system in an oven equipped with a benchmark instrument;

### DETAILED DESCRIPTION OF THE INVENTION

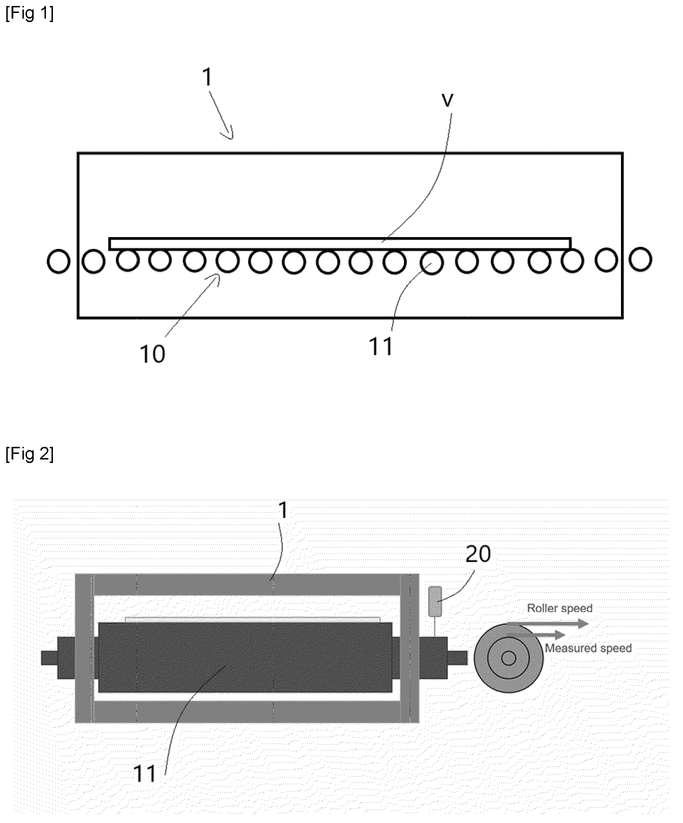

Figure 1 shows a conveying system 10 for sheet of glass V. Such a conveying system comprises a plurality of rollers 11, said rollers being driven by driving means. Driving means are used to drive the rollers so as to convey the sheet of glass with a defined speed. The rollers comprise a gear wheel arranged to cooperate with driving means. The conveying system is arranged to convey sheets of glass through oven 1. Figure 1 represents a side view of a roller in said conveying system. In said side view, we can see the housing of the oven 1 and the glass sheet passing through said oven. A roller passing through the oven comprises a conveying zone wherein the glass sheet is supported. The conveying zone is submitted to the heat from the oven.

To check the proper functioning of the rollers 11, the present invention attends a method of checking these rollers.

This method uses a surface speed measurement device. This surface speed measurement device could use Laser Doppler technology. In this case, the surface speed measurement device is a Laser surface velocimeter / laser Doppler measuring device 20. Laser surface velocimeters work evaluating the laser light scattered back from a moving object or surface. Nevertheless, others technologies could be used for the surface speed measurement device. For example, the surface speed measurement device could be a tachometer. This tachometer could use an optical, magnetic or inductive tachometer. This tachometer is associated to a conversion unit so that it could output the same type of speed as a laser surface velocimeter.

The method according to the invention comprises several steps. The first step is to carry the surface speed measurement device like a Laser surface velocimeter or laser Doppler measuring device 20.

In a second step, the surface speed measurement device is placed, positioned so that it is pointed at a position of a roller as seen on figure 2. Since the conveying system is arranged to convey sheets of glass through oven, the surface speed measurement device should not be submitted to heat. In view of that, the point of the roller used to measure the speed should be chosen to be out of the zone covered by the oven.

The roller furthers comprises external zones, located at the ends of the rollers. These ends are used to fix said roller in a frame. The conveying system comprises one or more frames used to support the rollers. The ends of the rollers are also used to cooperate with the driving means.

The ends of the rollers are designed so that the diameter of these ends could be different from the diameter of the rollers in the conveying zone as shown on figure 2.

In a third step, the surface speed measurement device is used to measure the speed at the surface of the roller. This measurement is operated for each roller to be checked.

Indeed, with the method according to the present invention, it is possible to check the functioning of a plurality of rollers, these rollers could be all the rollers or some of the rollers of the conveying system. It is thus possible to check the rollers of a particular part of the conveying system. For example, the conveying system could be divided into several parts: a part wherein the glass sheet is placed on the conveying system, a part wherein the glass sheet is heated, a part wherein the glass sheet is formed and a part wherein the glass sheet is cooled. In view of above, it is possible to use the method according the present invention to check the rollers of the part wherein the glass sheet is heated.

As the rollers are designed to have several diameters, the speed measured on the surface of the rollers could be different so that it is not possible to compare these measurements.

To avoid this, the method according to the present invention comprises a fourth step wherein each measure of the speed on the surface is compared to the true speed of the rollers. Indeed, the rollers are driven by the driving means so that the sheet of glass move at a defined speed. This defined speed is considered as being the true speed of displacement of the glass sheet.

To do that, this measurement of speed is performed so that, for each roller, a serial of values of speed is measured. This serial of values is used by a calculation unit so as to obtain a mean value of speed. Each mean value of speed is compared to the defined speed. This comparison is done to obtain a factor K, also called correction factor, between the mean value of speed and the defined speed. This comparison is done for each roller.

Indeed, as previously mentioned, the mean value of speed is a speed on the surface of the rollers. But, this speed could be different in view of the position of the surface speed measurement device and in view of the diameter of the roller. Thus, the comparison between the mean value of speed and the defined speed is done to have, for each roller, a factor K so that all the rollers to be checked could be compared.

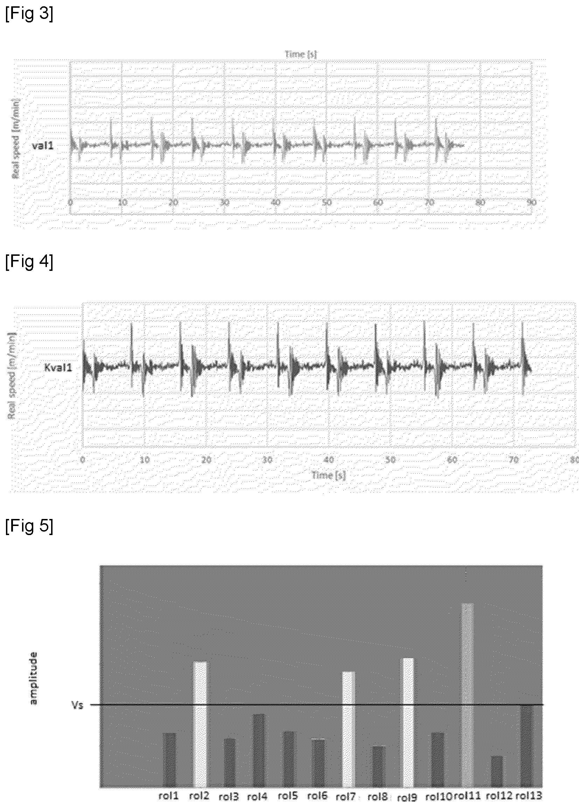

A diagram representing the speed (m/min) in view of time (second) is shown in figure 3. In this diagram, some variations of speed around value val1 could be observed. These variations are due to both, turning instability of the roller (ε_{Movement}) and measuring error (ε_{Measurement}) but turning instability is, in this example, much bigger than measuring error.

Thus, each diagram is amplified with the factor K linked to its roller so as to obtain the diagram on figure 4. It is understood that, for a first roller R1, a diagram D1 representing the measured speed V1 in view of time. The comparison between the defined speed and the mean value of speed V1 allows to obtain a correction factor K1. For a second roller R2, a diagram D2 representing the measured speed V2 in view of time. The comparison between the defined speed and the mean value of speed V2 allows to obtain a correction factor K2. Thus, the diagram D1 is amplified by the factor K1 and the diagram D2 is amplified by the factor K2.

With these amplified diagrams, seen on figure 4, it is possible, in a fifth step, to compare them and to obtain statistics. These statistics are based on speed variation like standard deviation, variation range, mean absolute deviation, etc. Indeed, a purpose of the present invention is not to determine whether a roller is malfunctioning but whether one roller among others functions differently. Indeed, as explain previously, the variation in speed between the rollers and the glass ribbon causes the glass defects to appear. The comparison of the diagrams allows to detect which roller have a variation of speed higher than the others.

To compare the rollers, a calculation unit is used. This calculation unit is arranged to divide each diagram in several time periods, each time periods representing one lap of the roller. After that, the calculation unit measure, for each time period, a key performance indicator. This key performance indicator could be, for example, the amplitude A between the lower speed and the higher speed. These values of amplitude are averaged to obtain an average value of amplitude Am. This calculation is operated for each diagram. Nevertheless, other key performance indicator are mean absolute deviation (MAD), the standard deviation, the variation range (amplitude), kurtosis, etc.

With these average values of amplitude Am, in the example, for each roller, it is possible to create a diagram as shown in figure 5. In this diagram, these values of amplitude Am are represented, these values are linked to the rollers. In this diagram, it is possible to see on x-coordinate the name of the rollers and on y-coordinate the value of amplitude Am.

The calculation unit is thus able to make statistics based on this diagram. The statistics are made so as to determine which rollers have a speed variability higher or lower than the others. in the diagram shown on figure 5, we can see that some of the rollers have a speed variability higher than the others.

In view of this diagram, a threshold value Vs could be defined by the calculation unit. This threshold value is used to determine if the variation of speed, instability of the speed, of a roller is considered as being normal or if this variation of speed could be a problem.

In the example of figure 5, we can see that rollers called rol2, rol7, rol9 and rol11 have an amplitude higher that the threshold value for these rollers.

The calculation unit are thus used to send a report wherein said rollers having a value of amplitude higher than the threshold are listed. This list of rollers is used to plan a reconditioning or a replacement of these rollers.

Alternatively, the threshold value is not defined but calculated. To do that, the values of amplitude are added together and averaged so as to obtain a calculated threshold. Then, the value of amplitude of each roller is compared to said threshold to check the rollers.

Of course, this comparison between rollers could be done with another key performance indicator like mean absolute deviation (MAD), the standard deviation, the variation range (amplitude), kurtosis, etc.

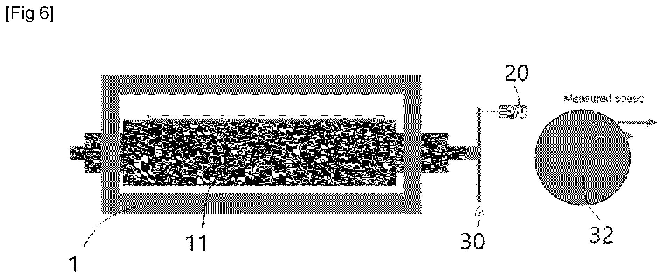

In a variant, a benchmark instrument 30 could be used as shown in figure 6. This benchmark instrument is an instrument used to help the operator during the step wherein the surface speed measurement device is pointed on the roller. Indeed, due to the geometry of the rollers, it could be difficult to position the surface speed measurement device.

The benchmark instrument 30 comprises, in a non-limitative embodiment, a disc 32. According to the invention, this disc is able to be fix to a roller so that the plan of said disc is perpendicular to the floor or orthogonally to the axis of the roller. Said disc could comprise a reference point such as an imprint. This reference point is used to help the operator. Indeed, the operator uses this reference point as a target for the surface speed measurement device. Thus, the surface speed measurement device could be positioned to target this reference point. This reference point become a circular track when the disc rotates. The reference point is targeted by the surface speed measurement device when the roller is stationary or rotating.

With this benchmark instrument, the operator is helped because he just has to fix the benchmark instrument to the roller and place the surface speed measurement device pointing to the benchmark instrument. And furthermore, he could use the reference point so that the factors k of the rollers are close to each other.

Evidently, the present invention is not limited to the illustrated example, but may be varied and modified in different ways which will be apparent to those skilled in the art.

## Claims

1. Method for checking the rollers of conveying means, said conveying means being driven to a defined line speed, said method comprising the steps of:
- Carrying a surface speed measurement device;
- For each of a plurality of rollers,
• Pointing the measuring device to a location of a roller to obtain a serial of values representative of the speed for this roller;
• Calculating the mean value of the serial of values representative of the speed for this roller
• Comparing the mean value representative of the speed for the roller to the line speed so as to obtain a factor K;
• Multiplying each value of the serial of values representative of the speed by its factor K to obtain corrected values of speed
- using said corrected values representative of the speed to determine the speed variation to check the rollers.

2. . Method according to claim 1, wherein the value representative of the speed variation is chosen in the list comprising mean absolute deviation, the standard deviation, the variation range, the kurtosis, or any other statistics representing the variation of the speed.

3. . Method according to claim 1 or 2, wherein the value representative of the speed variation is compared to a defined threshold.

4. . Method according to claim 1 or 2, wherein the value representative of the speed variation of each roller are added together and averaged to obtain a calculated threshold, each value representative of the speed is compared to said calculated threshold.

5. . Method according to one of the preceding claims, wherein it comprises, before the step of pointing the surface speed measurement device, a step consisting in carrying a benchmark instrument and fix it to a roller.

6. . Method according to claim 5, wherein the benchmark instrument is a disc able to be fix to a roller, the plan of said disk being perpendicular to the floor.

7. . Method according to claim 6, wherein the benchmark instrument further comprises a reference point so that the surface speed measurement device is positioned to point at the reference point.

8. . Method according to one of the preceding claims, wherein the surface speed measurement device is a laser Doppler measuring device.

## Patentansprüche

1. Verfahren zum Prüfen der Rollen eines Fördermittels, wobei das Fördermittel mit einer definierten Liniengeschwindigkeit angetrieben wird, das Verfahren umfassend die Schritte:
- Mitführen einer Oberflächengeschwindigkeitsmessvorrichtung;
- für jede einer Vielzahl von Rollen
• Richten der Messvorrichtung auf einen Standort einer Rolle, um eine Reihe von Werten zu erhalten, die die Geschwindigkeit dieser Rolle darstellen;
• Berechnen des Mittelwerts der Reihe von Werten, die die Geschwindigkeit dieser Rolle darstellen
• Vergleichen des Mittelwerts, der die Geschwindigkeit der Rolle darstellt, mit der Liniengeschwindigkeit, um einen Faktor K zu erhalten;
• Multiplizieren jedes Werts der Reihe von Werten, die die Geschwindigkeit darstellen, mit seinem Faktor K, um korrigierte Geschwindigkeitswerte zu erhalten
- Verwenden der korrigierten Werte, die die Geschwindigkeit darstellen, um die Geschwindigkeitsschwankung zu bestimmen, um die Rollen zu prüfen.

2. Verfahren nach Anspruch 1, wobei der Wert, der die Geschwindigkeitsschwankung darstellt, aus der Liste ausgewählt ist, umfassend eine mittlere absolute Abweichung, die Standardabweichung, den Schwankungsbereich, die Kurtosis oder beliebige andere Statistiken, die die Geschwindigkeitsschwankung darstellen.

3. Verfahren nach Anspruch 1 oder 2, wobei der Wert, der die Geschwindigkeitsschwankung darstellt, mit einem definierten Schwellenwert verglichen wird.

4. Verfahren nach Anspruch 1 oder 2, wobei die Werte, die die Geschwindigkeitsschwankung jeder Rolle darstellen, addiert und gemittelt werden, um einen berechneten Schwellenwert zu erhalten, wobei jeder Wert, der die Geschwindigkeit darstellt, mit dem berechneten Schwellenwert verglichen wird.

5. Verfahren nach einem der vorstehenden Ansprüche, wobei es vor dem Schritt des Ausrichtens der Oberflächengeschwindigkeitsmessvorrichtung einen Schritt umfasst, der darin besteht, ein Bezugswertinstrument mitzuführen und es an einer Rolle zu befestigen.

6. Verfahren nach Anspruch 5, wobei das Bezugswertinstrument eine Scheibe ist, die in der Lage ist, an einer Rolle befestigt zu werden, wobei die Ebene der Scheibe senkrecht zu dem Boden steht.

7. Verfahren nach Anspruch 6, wobei das Bezugswertinstrument ferner einen Referenzpunkt umfasst, so dass die Oberflächengeschwindigkeitsmessvorrichtung positioniert ist, um auf den Referenzpunkt gerichtet zu sein.

8. Verfahren nach einem der vorstehenden Ansprüche, wobei die Oberflächengeschwindigkeitsmessvorrichtung eine Laser-Doppler-Messvorrichtung ist.

## Revendications

1. Procédé de commande afin de vérifier les rouleaux d'un moyen de transport, ledit moyen de transport étant entraîné à une vitesse de ligne définie, ledit procédé comprenant les étapes consistant à :
- Porter un dispositif de mesure de vitesse de surface ;
- Pour chacun d'une pluralité de rouleaux,
• Pointer le dispositif de mesure à un emplacement d'un rouleau pour obtenir une série de valeurs représentatives de la vitesse pour ce rouleau ;
• Calculer la valeur moyenne de la série de valeurs représentatives de la vitesse pour ce rouleau
• Comparer la valeur moyenne représentative de la vitesse du rouleau à la vitesse de ligne afin d'obtenir un facteur K ;
• Multiplier chaque valeur de la série de valeurs représentatives de la vitesse par son facteur K pour obtenir les valeurs corrigées de la vitesse
- utiliser lesdites valeurs corrigées représentatives de la vitesse pour déterminer la variation de vitesse afin de commander des rouleaux.

2. Procédé selon la revendication 1, dans lequel la valeur représentative de variation de vitesse est choisie dans la liste comprenant l'écart moyen absolu, l'écart type, la plage de variation, l'aplatissement, ou toute autre statistique représentant la variation de la vitesse.

3. Procédé selon la revendication 1 ou 2, dans lequel la valeur représentative de la variation de vitesse est comparée à un seuil défini.

4. Procédé selon la revendication 1 ou 2, dans lequel les valeurs représentatives de la variation de vitesse de chaque rouleau sont additionnées et moyennées pour obtenir un seuil calculé, chaque valeur représentative de la vitesse étant comparée audit seuil calculé.

5. Procédé selon l'une quelconque des revendications précédentes, dans lequel il comprend, avant l'étape de pointage du dispositif de mesure de la vitesse de surface, une étape consistant à porter un instrument de référence et à le fixer sur un rouleau.

6. Procédé selon la revendication 5, dans lequel l'instrument de référence est un disque pouvant être fixé à un rouleau, le plan dudit disque étant perpendiculaire au sol.

7. Procédé selon la revendication 6, dans lequel l'instrument de référence comprend en outre un point de référence de sorte que le dispositif de mesure de vitesse de surface est positionné de manière à pointer vers le point de référence.

8. Procédé selon l'une quelconque des revendications précédentes, dans lequel le dispositif de mesure de vitesse de surface est un dispositif de mesure laser Doppler.
